# EUROPÄISCHE PATENTSCHRIFT

(11) **EP 4 097 553 B1**
(45) Veröffentlichungstag und Bekanntmachung des Hinweises auf die Patenterteilung: **28.02.2024**
(21) Anmeldenummer: 21702630.1
(22) Anmeldetag: 28.01.2021
(51) Int. Cl.: G05D 1/02

(54) **TRANSPORTSYSTEM ZUM TRANSPORTIEREN VON WERKSTÜCKEN UND VERFAHREN ZUM BETREIBEN EINES SOLCHEN TRANSPORTSYSTEMS**
TRANSPORT SYSTEM FOR TRANSPORTING WORKPIECES AND METHOD FOR OPERATING A TRANSPORT SYSTEM OF THIS TYPE
SYSTÈME DE TRANSPORT POUR LE TRANSPORT DE PIÈCES ET PROCÉDÉ POUR FAIRE FONCTIONNER UN SYSTÈME DE TRANSPORT DE CE TYPE

(30) Priorität: 31.01.2020 DE 102020102513
(43) Veröffentlichungstag der Anmeldung: 07.12.2022
(73) Patentinhaber: Eisenmann GmbH, 71032 Böblingen (DE)
(72) Erfinder: JARSCH, Stefan, 71111 Waldenbuch (DE); EIPPER, Axel, 71083 Herrenberg (DE)
(74) Vertreter: Ostertag & Partner Patentanwälte mbB
(86) Internationale Anmeldenummer: PCT/EP2021/051970
(87) Internationale Veröffentlichungsnummer: WO 2021/152004

(56) Entgegenhaltungen:
- EP-A1- 2 339 376
- DE-A1- 10 341 128
- DE-A1-102010 021 042
- DE-A1-102016 216 320

## Beschreibung

### HINTERGRUND DER ERFINDUNG

### 1. Gebiet der Erfindung

Die Erfindung betrifft ein Transportsystem zum Transportieren von Fahrzeugkarosserien oder anderen Werkstücken nach dem Oberbegriff des Anspruchs 1, dessen fahrerlose Transportfahrzeuge mit einem Personenschutzsensor ausgestattet sind. Ein solches Transportsystem ist aus der EP 2 339 376 A1 bekannt. Die Erfindung betrifft ferner ein Verfahren zum Betreiben eines solchen Transportsystems.

### 2. Beschreibung des Standes der Technik

Fahrerlose Transportfahrzeuge sind in der Regel mit einem optischen Personenschutzsensor versehen, der an der Frontseite des Fahrzeugs montiert ist und erfasst, ob sich Personen in einem in Fahrtrichtung vorausliegenden Überwachungsbereich befinden. Der Überwachungsbereich ist häufig in ein Warnfeld und ein Schutzfeld unterteilt, deren Größe und Form unabhängig voneinander festlegbar sind. Wird eine Person im Warnfeld erfasst, führt dies je nach Auslegung des Sicherheitssystems zur Abgabe von optischen oder akustischen Warnhinweisen und/oder zu einer Reduzierung der Fahrzeuggeschwindigkeit.

Weitergehende Sicherheitsmaßnahmen werden ausgelöst, wenn sich eine Person im Schutzfeld befindet. Im Allgemeinen bremst das Fahrzeug dann mit maximaler Bremsverzögerung ab, um eine Kollision zu vermeiden. Die Abmessungen des Schutzfeldes müssen deswegen den Anhalteweg des Fahrzeugs berücksichtigen.

Ein Problem bei derartigen Systemen besteht darin, dass der Personenschutzsensor nicht zwischen Personen und Objekten differenzieren kann. Daher lösen auch Objekte, die im Überwachungsbereich erfasst werden, Sicherheitsmaßnahmen aus. Ohne zusätzliche Maßnahmen könnte ein solches fahrerloses Transportfahrzeug beispielsweise nicht zwischen zwei Pfosten hindurchfahren, deren Abstand nur wenig größer ist als die Breite des Transportfahrzeugs. Üblicherweise bestehen diese Maßnahmen darin, den Überwachungsbereich entweder kurzzeitig auszuschalten (sog. Muting) oder in seinen Abmessungen so zu begrenzen, dass die störenden stationären Objekte nicht mehr erfasst werden.

Aus der DE 199 15 509 A1 ist ein als Flächendistanzsensor ausgebildeter optischer Sensor bekannt, bei dem mehrere unterschiedlich dimensionierte Schutzfelder vorgegeben werden können. Mittels mehrerer Schalter können die Schutzfelder einzeln ausgewählt und aktiviert werden.

Die DE 10 2005 054 359 A1 schlägt zur Verbesserung eines solchen Personenschutzsensors vor, die Auswahl der vorgegebenen Schutzfelder selbständig vom optischen Sensor in Abhängigkeit von der Fahrtrichtung und/oder der Geschwindigkeit des Transportfahrzeugs vornehmen zu lassen. Zur Ermittlung dieser Größen erfasst der Sensor die entlang dem Fahrweg angeordneten stationären Objekte, so dass keine externen Messeinrichtungen benötigt werden.

Bei der aus der EP 2 722 687 A1 bekannten Sicherheitseinrichtung werden die Abmessungen des Schutzfeldes fortlaufend in einem dynamischen Prozess in Abhängigkeit von einer berechneten Nothaltetrajektorie festgelegt.

Die EP 3 330 740 A1 offenbart eine Sicherheitseinrichtung, bei dem das Schutzfeld geschwindigkeitsabhängige Abmessungen hat. Zusätzlich wird die Form des Schutzfeldes in seiner Form im Wege eines Einlernprozesses modifiziert. Nähert sich das Transportfahrzeug beispielsweise beim Einlernen einer Wand oder einem anderen Objekt, wird die Kontur des Objekts vom optischen Sensor erfasst und das Schutzfeld so verkleinert, dass es bei späteren Fahrten auf dem gleichen Fahrweg nicht zu ungewollten Nothalten oder anderen Sicherheitsmaßnahmen kommt.

Bei Transportfahrzeugen, die nicht auf fest vorgegebenen, sondern auf - zumindest in gewissen Grenzen - variablen Fahrwegen fahren, ist ein solcher Einlernprozess jedoch kaum möglich. Selbst wenn die Fahrwege fest vorgegeben sind, ist diese bekannte Sicherheitseinrichtung wenig flexibel in ihrer Handhabung. Wenn beispielsweise in der Nähe eines vorgegebenen Fahrwegs ein neues Objekt platziert wird, muss ein erneuter Einlernvorgang durchgeführt werden, da ansonsten der optische Sensor das neues Objekt bei der Vorbeifahrt erfasst und eine Sicherheitsmaßnahme auslöst.

Auch die zeitweise Abschaltung des Überwachungsbereichs (Muting) stellt keine praktikable Lösung dar, da mit dem Abschalten nicht vernachlässigbare Sicherheitsrisiken einhergehen.

### ZUSAMMENFASSUNG DER ERFINDUNG

Aufgabe der Erfindung ist es, ein Transportsystem sowie ein Verfahren zum Betreiben eines Transportsystems anzugeben, das es ermöglicht, Personen in einem Überwachungsbereich der Transportfahrzeuge zuverlässig zu erkennen, ohne dass Störungen durch Objekte im Wege aufwendiger Einlernprozesse unterbunden werden müssen.

Diese Aufgabe wird gelöst durch ein Transportsystem zum Transportieren von Werkstücken, das einen Fahrweg, mehrere entlang des Fahrwegs angeordnete Objekte und ein fahrerloses Transportfahrzeug aufweist, das eine Werkstückaufnahme und einen Personenschutzsensor hat. Der Personenschutzsensor weist einen Sender zur Erzeugung von Detektionsstrahlung und einen Empfänger auf, der dazu eingerichtet ist, Detektionsstrahlung zu empfangen, die von dem Sender erzeugt und von Personen und Objekten reflektiert wurden, die sich in einem Überwachungsbereich befinden, der von der Detektionsstrahlung erfasst wird. Das Transportsystem umfasst ferner eine Steuereinrichtung, die dazu eingerichtet ist, das Transportfahrzeug entlang des Fahrwegs so zu steuern, dass es nicht mit den Objekten kollidiert. Die Steuereinrichtung löst eine Sicherheitsmaßnahme aus, wenn der Personenschutzsensor eine Person in dem Überwachungsbereich erfasst hat. Erfindungsgemäß tragen die Objekte eine Beschichtung oder eine Verkleidung, die darauf auftreffende Detektionsstrahlung absorbiert oder so gerichtet reflektiert, dass sie nicht auf den Empfänger gelangen kann.

Die Erfindung beruht auf der Überlegung, dass es bei vielen Anwendungen fahrerloser Transportfahrzeuge einfacher ist, die Objekte, deren Erfassung durch den Personenschutzsensor zu ungewollten Verzögerungen oder Unterbrechungen des Betriebsablaufs führen, nicht auf elektronischem, sondern auf optischem Wege für den Personenschutzsensor unsichtbar zu machen. Denn wenn die auf ein Objekt auftreffende Detektionsstrahlung nicht mehr zurück zum Empfänger gelangen kann, ist das betreffende Objekt für den Personenschutzsensor nicht mehr erkennbar mit der Folge, dass es nicht zum Auslösen von Sicherheitsmaßnahmen kommen kann.

Wenn vorliegend davon die Rede ist, dass keine Detektionsstrahlung mehr auf den Empfänger gelangen kann, ist dies nicht streng wörtlich in dem Sinne zu verstehen, dass die auf den Empfänger auftreffende Intensität exakt Null ist. Im Allgemeinen wird trotz der von den Objekten getragenen Beschichtung oder der Verkleidung noch Detektionsstrahlung infolge von Streuprozessen an Schmutzpartikeln, die sich in der Luft oder auf der gerichtet reflektierenden Verkleidung befinden, auf den Empfänger gelangen. Die Intensität dieser Streustrahlung ist jedoch so gering, dass sie entweder nicht vom Empfänger detektiert werden kann oder unterhalb eines Schwellenwertes liegt, bei dem der Empfänger davon ausgeht, dass die Detektionsstrahlung von einer Person oder einem Objekt reflektiert wurde.

Unter einer gerichteten Reflexion wird eine Reflexion verstanden, für die das Reflexionsgesetz (Einfallswinkel ist gleich Ausfallswinkel) gilt. Die gerichtete Reflexion tritt nur an glatten Oberflächen auf. Im Gegensatz dazu wird Strahlung an rauen Oberflächen diffus in unterschiedliche Richtungen gestreut.

Die Erfindung ist besonders dann vorteilhaft einsetzbar, wenn das Transportfahrzeug sich entlang vieler unterschiedlicher Fahrwege bewegen kann und/oder die Anordnung der Objekte sich öfter ändert. Natürlich müssen solche Änderungen auch bei dem erfindungsgemäßen Transportsystem von der Steuereinrichtung berücksichtigt werden, damit diese das Transportfahrzeug so steuern kann, dass keine Kollisionen mit den Objekten auftreten. Hierzu genügt es jedoch, die Koordinaten und Abmessungen der Objekte einmal im Steuersystem zu hinterlegen. Wenn sich das Transportfahrzeug aus unterschiedlichen Richtungen einem solchen Objekt nähert, kann die Steuereinrichtung Kollisionen mit dem Objekt zuverlässig vermeiden. Bei herkömmlichen Transportsystemen muss dann aber auch der Überwachungsbereich für jeden möglichen Fahrweg im Wege des oben beschriebenen Einlernprozesses angepasst werden, was sehr aufwendig ist.

Bei dem erfindungsgemäßen Transportsystem hingegen sind in einem solchen Fall keine Einlernprozesse erforderlich, da das Objekt aufgrund der davon getragenen Beschichtung oder Verkleidung für den Personenschutzsensor des Transportfahrzeugs unsichtbar ist. Folglich ist es auch nicht erforderlich, den Überwachungsbereich zu verkleinern, wenn sich das Transportfahrzeug dem Objekt nähert. Da der Überwachungsbereich bei dem erfindungsgemäßen Transportsystem nicht modifiziert werden muss, wird die eigentliche Funktion des Personenschutzsensors, Kollisionen mit Personen zu vermeiden, im Gegensatz zu den bekannten Transportsystemen zu keinem Zeitpunkt eingeschränkt.

Die Erfindung ist aber auch vorteilhaft bei Transportsystemen einsetzbar, bei denen die Transportfahrzeuge schienengebunden sind oder auf anderen fest vorgegebenen Fahrwegen verkehren. Auch dort werden aufwendige Einlernprozesse überflüssig.

Welche Sicherheitsmaßnahme von der Steuereinrichtung ausgelöst wird, wenn der Personenschutzsensor eine Person in dem Überwachungsbereich erfasst, kann wie bei den bekannten Transportsystemen u.a. davon abhängig gemacht werden, wo sich die erfasste Person im Überwachungsbereich befindet. Ist der Überwachungsbereich beispielsweise in eine Warnzone und in eine Schutzzone unterteilt, so genügt beim Erfassen einer Person in der Warnzone häufig ein optisches oder akustisches Warnsignal. Befindet sich die Person hingegen in der Schutzzone, muss das Transportfahrzeug möglichst umgehend zum Stillstand gebracht werden.

Wird als Detektionsstrahlung sichtbares Licht verwendet, sollte die Beschichtung oder Verkleidung reflektierend sein, da ein schwarzer Anstrich nicht genügt, um die Objekte für den Personenschutzsensor unsichtbar zu machen. Zu berücksichtigen ist dabei, dass der Personenschutzsensor auch in der Lage sein muss, eine Person zuverlässig zu erkennen, die schwarze und damit stark absorbierende Kleidung trägt.

Bei anderen Wellenlängen hingegen können absorbierende Materialien eingesetzt werden, die nicht für die Kleidung von Personen geeignet sind. Bei der Verwendung von langwelliger Infrarotstrahlung kann beispielsweise Vanadiumdioxid als Absorber eingesetzt werden, das einen Absorptionsgrad von beinahe 1 hat. Handelt es sich bei der Detektionsstrahlung hingegen um Radarstrahlung, können Materialien eingesetzt werden, wie sie aus der Tarnkappentechnik bekannt sind, zum Beispiel Schaumabsorber oder sog. Dallenbach-Absorber. Vor allem dann, wenn das absorbierende Material als Lack aufgetragen werden kann, ist es besonders einfach, auf diesem Wege Objekte für den Personenschutzsensor unsichtbar zu machen.

Um eine ausreichend hohe Ortsauflösung zu erzielen, sollte die Wellenlänge der Detektionsstrahlen aber nicht zu groß sein. Bevorzugt verwendet der Personenschutzsensor deswegen Wellenlängen, die in einem Bereich zwischen 250 nm und 1 cm liegen. In der Regel nutzt der Sender des Personenschutzsensors nur ein sehr schmales Frequenzband in diesem Bereich. Besonders geeignet ist Infrarotlicht mit Wellenlängen zwischen 780 nm und 50 µm.

Die meisten bekannten Personenschutzsensoren sind als Laserscanner ausgeführt. In Laserscannern rotiert eine Laserquelle oder ein Scanspiegel, wodurch der Laserstrahl eine Ebene vollständig überstreicht. Es sind aber auch Personenschutzsensoren bekannt, bei denen mehrere nebeneinander angeordnete Laserdioden das Licht fächerartig abstrahlen, wie dies beispielsweise in der DE 101 10 420 A1 (entspricht US 2002/0149760 A) beschrieben ist.

Wenn sich die von dem Personenschutzsensor erzeugte Detektionsstrahlung in einer Ebene ausbreitet, die zumindest annähernd parallel zu einer Bodenfläche angeordnet ist, auf der sich das Transportfahrzeug bewegt, so genügt es, dass die Objekte nicht vollständig, sondern nur innerhalb eines Höhenabschnitts, der von der Ebene durchsetzt wird, die Beschichtung oder die Verkleidung tragen. Dies trägt der Tatsache Rechnung, dass die Objekte in Bereichen, auf die unter keinen Umständen Detektionsstrahlen auftreffen kann, auch keine Beschichtungen oder Verkleidungen benötigen, um sie für den Personenschutzsensor unsichtbar zu machen. Wie breit der Höhenabschnitt sein muss, innerhalb dessen Beschichtungen oder Verkleidungen vorzusehen sind, hängt von vielen Parametern ab. Berücksichtigt werden müssen beispielsweise Kippbewegungen, die der Personenschutzscanner gemeinsam mit dem Transportfahrzeug beim Überfahren von Bodenunebenheiten, Steigerungen oder in Folge von Beschleunigungsvorgängen ausführt. Durch jede Kippbewegung um eine horizontale Achse wird der Überwachungsbereich verschwenkt. Je länger der Überwachungsbereich ist, desto stärker schwenkt das Ende des Überwachungsbereichs bei Kippbewegungen aus.

Damit eine Beschichtung oder eine Verkleidung die darauf auftreffende Detektionsstrahlung so gerichtet reflektiert, dass sie nicht auf den Empfänger gelangen kann, muss die Reflexion gerichtet sein, und zwar derart, dass die auftreffende Detektionsstrahlung nicht in sich zurückreflektiert wird.

Um die Reflexionsrichtung frei festlegen zu können, ist es am einfachsten, wenn die Objekte eine Verkleidung tragen, die einen spiegelnd beschichteten Träger aufweist. Die Verkleidung kann dann so ausgerichtet werden, dass die auftreffende Reflexionsstrahlung nicht in sich zurückreflektiert wird. Der Träger kann beispielsweise eine Kunststofffolie, eine Pappe, eine Metallplatte oder eine Glasplatte umfassen. Als Verkleidung kann jedoch auch eine Metallfolie verwendet werden, die sich besonders leicht nachträglich an Objekten anbringen lässt. Um Rückreflexionen zu vermeiden, kann es aber je nach Außenkontur der Objekte erforderlich sein, die Metallfolie auf einen am Objekt befestigen Rahmen o.ä. aufzuspannen.

Besonders einfach ist es, wenn der Träger der Verkleidung so ausgerichtet ist, dass die Einfallsebene der Detektionsstrahlung vertikal ausgerichtet ist. Wenn die Einfallsebene, die durch die Einfallsrichtung der Detektionsstrahlung und die Flächennormale des Trägers am Auftreffort aufgespannt wird, vertikal ausgerichtet ist, bedeutet dies anschaulich, dass die auftreffende Detektionsstrahlung nach oben oder nach unten abgelenkt wird. Wenn das Transportfahrzeug mehrere Personenschutzsensoren hat, sind diese in der Regel auf der gleichen Höhe angeordnet, sodass nach oben oder nach unten abgelenkte Detektionsstrahlung nicht von einem anderen Personenschutzsensor erfasst werden kann.

Vor allem bei sich vertikal erstreckenden Beinen, Stützen, Säulen oder ähnlichen Objekten bietet es sich an, dem Träger zumindest eine abschnittweise konische Form zu geben. Ein solcher Träger ist kostengünstig herstellbar, kann mit einfachen Mitteln auf der erforderlichen Höhe an dem betreffenden Objekt befestigt werden und lenkt auftreffende Detektionsstrahlung zuverlässig nach oben oder nach unten ab, so dass sie nicht mehr den Personenschutzsensor erreichen kann.

Bezüglich des Verfahrens wird die eingangs genannte Aufgabe durch ein Verfahren zum Betreiben eines Transportsystems für den Transport von Werkstücken gelöst, das die folgenden Schritte aufweist:
a) Bereitstellen eines Transportsystems mit einem fahrerlosen Transportfahrzeug, das eine Werkstückaufnahme und einen Personenschutzsensor hat, der einen Sender zur Erzeugung von Detektionsstrahlung und einen Empfänger aufweist, wobei der Empfänger dazu eingerichtet ist, Detektionsstrahlung zu empfangen, die von dem Sender erzeugt und von Personen oder Objekten reflektiert wurden, die sich in einem Überwachungsbereich befinden, der von der Detektionsstrahlung erfasst wird,
b) Anbringen einer Beschichtung oder einer Verkleidung auf Objekten, die entlang eines Fahrweges für das Transportfahrzeug angeordnet sind, wobei die Beschichtung bzw. die Verkleidung die darauf auftreffende Detektionsstrahlung absorbiert oder so gerichtet reflektiert, dass sie nicht auf den Empfänger gelangen kann;
c) Steuern des Transportfahrzeugs entlang des Fahrwegs so, dass es nicht mit den Objekten kollidiert;
d) Auslösen einer Sicherheitsmaßnahme, wenn der Personenschutzsensor eine Person in dem Überwachungsbereich erfasst hat.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Draufsicht auf ein erfindungsgemäßes Transportfahrzeug;
- Figur 2: eine schematische seitliche Darstellung eines Personenschutzsensors, der in dem Transportfahrzeug gemäß der Figur 1 angeordnet ist;
- Figur 3: das in der Figur 1 gezeigte Transportfahrzeug bei der Annäherung an stationäre Objekte;
- Figur 4: eine der Figur 3 entsprechende Draufsicht auf ein aus dem Stand der Technik bekanntes Transportfahrzeug, bei dem der Überwachungsbereich bei der Annäherung verkleinert wird, um Störungen durch Objekte zu vermeiden;
- Figuren 5a und 5b: der Figur 1 entsprechende Darstellungen eines Transportfahrzeugs bei der Annäherung an erfindungsgemäß verkleidete Objekte vor und nach dem Eindringen der Objekte in den Überwachungsbereich;
- Figur 6: eine schematische Seitenansicht eines vorderen Abschnitts des Transportfahrzeugs und eines verkleideten Objekts;
- Figur 7: eine perspektivische Darstellung eines pfeilerförmigen Objekts, das eine erfindungsgemäße Verkleidung trägt;
- Figur 8: einen schematischen Querschnitt durch eine Lackierkabine, in der ein erfindungsgemäßes Transportfahrzeug eine Fahrzeugkarosserie fördert und dabei durch einen Tunnel geschützt ist;
- Figur 9: einen schematischen Querschnitt durch einen Trockner, in der ein erfindungsgemäßes Transportfahrzeug eine Fahrzeugkarosserie fördert und dabei durch einen Tunnel geschützt ist;
- Figur 10: einen schematischen Querschnitt durch eine Stützstruktur, auf der ein erfindungsgemäßes Transportfahrzeug eine Fahrzeugkarosserie ablegt; und
- Figur 11: einen schematischen Längsschnitt durch eine Montageabschnitt einer Fertigungslinie, bei dem mehrere erfindungsgemäße Transportfahrzeuge sich unterhalb einer Montageplattform bewegen, die mittels verkleideter Stützen aufgeständert ist.

### BESCHREIBUNG BEVORZUGTER AUSFÜHRUNGSBEISPIELE

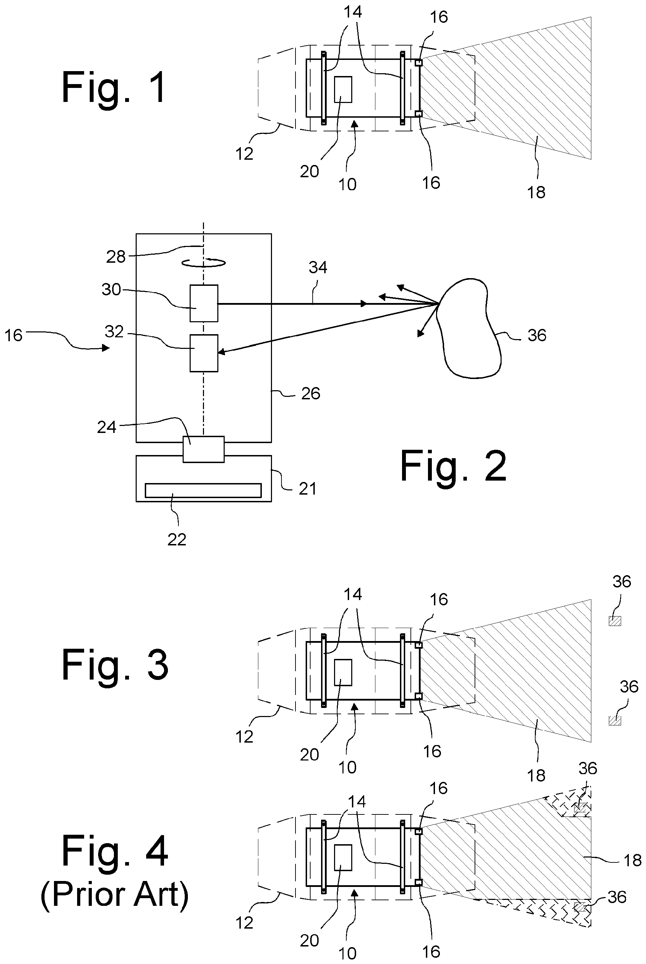

Die Figur 1 zeigt in einer schematischen Draufsicht ein erfindungsgemäßes Transportfahrzeug, das insgesamt mit 10 bezeichnet ist. Mit gestrichelten Linien ist die Kontur einer Fahrzeugkarosserie 12 angedeutet, die von einer Werkstückaufnahme 14 des Transportfahrzeugs 10 getragen wird. Am vorderen Ende des Transportfahrzeugs 10 sind zwei Personenschutzsensoren 16 angeordnet, deren Aufgabe es ist, Personen zu erfassen, die sich in einem vorausliegenden und in der Figur 1 schraffiert angedeuteten Überwachungsbereich 18 befinden. Der Einfachheit halber wird unterstellt, dass der Überwachungsbereich 18 kein Warnfeld umfasst, sondern nur aus einem Schutzfeld besteht. Erfasst einer der beiden Personenschutzssensoren 16 eine Person im Überwachungsbereich 18, so wird von einer Steuereinrichtung 20 des Transportfahrzeugs 10 eine Sicherheitsmaßnahme ausgelöst, bei der es sich zum Beispiel um einen Nothalt des Transportfahrzeugs 10 handeln kann.

Die Figur 2 zeigt eine beispielhafte Ausbildung eines der Personenschutzsensoren 16. Der Personenschutzsensor 16 umfasst ein Fußteil 21, in dem eine Auswerteeinheit 22 angeordnet ist. Über eine Drehlagerung 24 ist das Fußteil 21 mit einem Gehäuse 26 verbunden, das mit Hilfe eines nicht dargestellten Antriebs in Drehung um eine Drehachse 28 versetzbar ist. In dem Gehäuse 26 sind ein Sender 30 und ein Empfänger 32 angeordnet, die sich mit dem Gehäuse 26 mitdrehen. Der Sender 30, der als Laserdiode ausgebildet sein kann, sendet beim Betrieb des Personenschutzsensors 16 einen Lichtstrahl 34 aus, der schließlich auf ein Objekt 36 trifft. Im dargestellten Ausführungsbeispiel wird vom Sender 30 Infrarotlicht mit einer Wellenlänger von 905 nm erzeugt.

An der Oberfläche des Objekts 36 wird der Lichtstrahl 34 diffus reflektiert. Ein kleiner Teil des reflektierten Lichts gelangt zurück auf den Empfänger 32 und wird dort von einer Fotodiode oder einem anderen lichtempfindlichen elektronischen Bauelement erfasst. Um das Objekts 36 orten zu können, wird die Laufzeit des Lichtstrahls 34 zum Objekt 36 ermittelt, woraus sich der Abstand zum Objekt 36 ableiten lässt. Gleichzeitig wird die aktuelle Drehstellung des Gehäuses 26 erfasst. Auf diese Weise erhält man innerhalb der Ebene, die von dem Lichtstrahl 34 während der Drehung um die Drehachse 28 überstrichen wird, ein Abstandsprofil der Umgebung.

Um die seitlichen Begrenzungen des Überwachungsbereichs 18 festzulegen, werden nur diejenigen Abstandsdaten berücksichtigt, bei denen sich das Gehäuse 26 in einem bestimmten Winkelbereich befindet. Um die Länge des Überwachungsbereichs 18 festzulegen, werden nur diejenigen Abstände berücksichtigt, die kleiner sind als die gewünschte Länge. Durch die Kombination von Winkelstellung und berücksichtigten Abständen lassen sich somit die Form und Größe des Überwachungsbereichs 18 in gewissen Grenzen frei festlegen.

Nähert sich das Fahrzeug 10 zwei Objekten 36, wie dies die Figur 3 illustriert, so gelangen diese irgendwann in den Überwachungsbereich 18. Da die Personenschutzsensoren 16 nicht erkennen können, ob es sich bei den Objekten 36 um Gegenstände handelt, die sich an ihrem vorgesehenen Ort befinden und keine Gefahr für das Transportfahrzeug 10 darstellen, oder um Personen, die sich zufällig an dieser Stelle befinden, muss die Steuereinrichtung 20 einen Nothalt oder eine andere Sicherheitsmaßnahme veranlassen, sobald sich das Transportfahrzeug 10 den Objekten 36 so weit genähert hat, dass diese in den Überwachungsbereich 18 gelangen.

Um solche unerwünschten Unterbrechungen oder Verzögerungen der Fahrt des Transportfahrzeugs 10 zu vermeiden, wird bei den herkömmlichen Transportsystemen der Überwachungsbereich 18 modifiziert, wenn sich das Transportfahrzeug 10 den Objekten 36 nähert, wie dies die Figur 4 illustriert. Hierzu wird das Transportfahrzeug 10 zunächst im Wege eines nicht dargestellten Einlernprozesses auf dem vorgegebenen Fahrweg zwischen die beiden Objekte 36 hindurchgeführt. Wenn die Personenschutzsensoren 16 die Objekte 36 erkennen, wird der Überwachungsbereich 18 automatisch so verkleinert, dass die Objekte 36 außerhalb des Überwachungsbereichs 18 liegen. Auf diese Weise kann das Transportfahrzeug 10 zwischen den Objekten 36 hindurchfahren, ohne dass die Personenschutzsensoren 16 Sicherheitsmaßnahmen auslösen.

Die Objekte 36 werden bei den bekannten Transportsystemen somit von den Personenschutzsensoren 16 optisch erkannt, rechnerisch jedoch ignoriert, da nach dem Einlernprozess bekannt ist, dass sich an den dargestellten Positionen stationäre Objekte 36 befinden. Da die Abstandsdaten zu den Objekten 36 vorliegen, können sie von der Steuereinrichtung 20 auch für die Navigation verwendet werden, um eine gefahrlose Passage des Transportfahrzeugs 10 zwischen den Objekten 36 hindurch zu ermöglichen.

Der vorstehend beschriebene Einlernprozess ist jedoch aufwendig und erfordert häufig die Hinzuziehung von Softwarespezialisten. Außerdem funktioniert dieser Ansatz nur dann, wenn sich das Transportfahrzeug 10 exakt auf dem Fahrweg den Objekten 36 nähert, der dem Einlernprozess zugrunde gelegt wurde. Nähert sich das Transportfahrzeug 10 beispielsweise in einer Kurvenfahrt den Objekten 36, so können diese in den Überwachungsbereich 18 gelangen und eine Sicherheitsmaßnahme auslösen. Nachteilig ist ferner, dass zumindest zeitweise der Überwachungsbereich 18 verkleinert werden muss, wie dies in der Figur 4 unten rechts dargestellt ist. In diesem Bereich können keine Personen erfasst werden, was zu Sicherheitsrisiken führen kann.

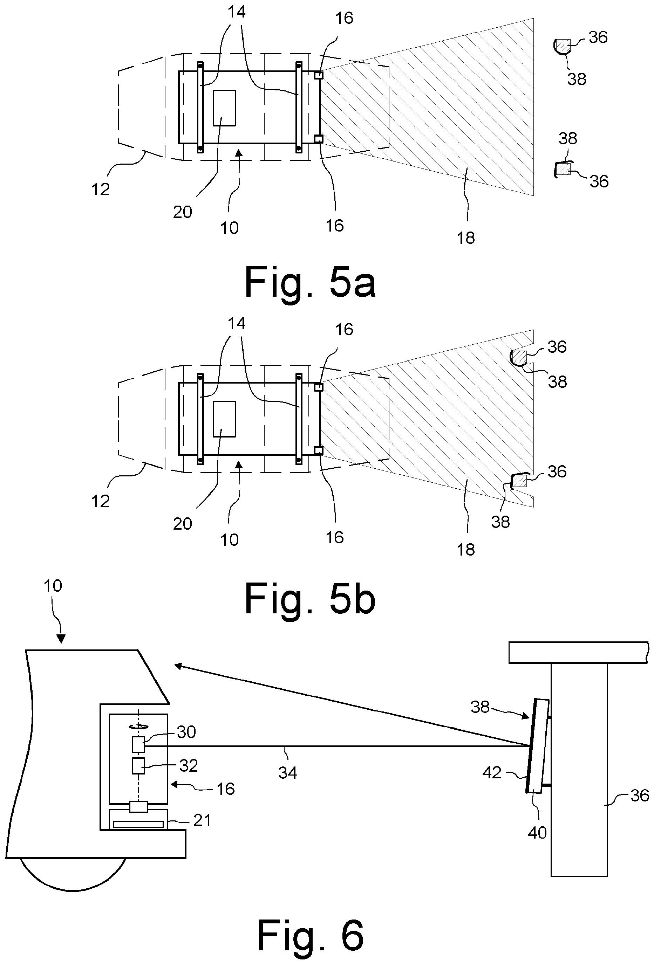

Die Figuren 5a und 5b zeigen ein erfindungsgemäßes Transportsystem in an die Figuren 3 und 4 angelehnten Darstellungen. Das Transportfahrzeug 10 mit den Personenschutzsensoren 16 ist strukturell genau gleich aufgebaut wie im Stand der Technik. Die Steuereinrichtung 20 muss aber nicht über die Möglichkeit verfügen, den Überwachungsbereich 18 im Wege eines Einlernprozesses zu modifizieren.

Eine Modifikation des Überwachungsbereichs 18 ist bei dem erfindungsgemäßen Transportsystem nicht erforderlich, weil die Objekte 36 Verkleidungen 38 tragen, durch welche die Objekte 36 für die Personenschutzsensoren 16 unsichtbar werden.

Die Figur 6 zeigt dieses Prinzip in einer schematischen Seitendarstellung. An dem Objekt 36 ist ein Träger 40 befestigt, der eine gerichtet reflektierende Beschichtung 42 trägt. Der Träger 40 kann beispielsweise aus Kunststoff, Pappe, Metall oder Glas bestehen und trägt eine dünne Metallschicht, die z.B. durch Bedampfen aufgebracht wurde. Der im Wesentlichen ebene Träger 40 ist so an dem Objekt 36 befestigt, dass die Flächennormale nicht horizontal, sondern in einem Winkel dazu angeordnet ist. Die Einfallsebene, die durch die Einfallsrichtung des einfallenden Lichtstrahls 34 und die Flächennormale aufgespannt wird, ist somit vertikal ausgerichtet ist und verläuft in der Papierebene. Ein auf die Beschichtung 42 auftreffender Lichtstrahl 34 eines Personenschutzsensors 16 wird deswegen nicht in sich zurückreflektiert, sondern nach oben abgelenkt, wodurch er nicht mehr auf den Empfänger 32 des Personenschutzsensors 16 gelangen kann.

Durch die Verkleidung 38 ist das Objekt 36 somit für den Personenschutzscanner 16 unsichtbar. Da der Empfänger 32 des Personenschutzsensors 16 bei der dargestellten Position des Lichtstrahls 34 kein reflektiertes Licht empfängt, nimmt der Personenschutzsensor 16 an, dass der Lichtstrahl 34 nie auf ein Hindernis getroffen ist.

Gelangt ein so verkleidetes Objekt 36 in den Überwachungsbereich 18 der Personenschutzsensoren 16, wie dies die Figur 5b zeigt, so führt dies lediglich dazu, dass Personen hinter den Objekten 36 nicht erkannt werden können. Dies ist beim Stand der Technik nicht anders und stellt auch kein Problem dar, da in einem solchen Fall die Person durch das Objekt 36 geschützt ist. Im Unterschied zum Stand der Technik bleibt der Überwachungsbereich 18 aber in seiner Größe vollständig erhalten und muss somit nicht rechnerisch in seinen Abmessungen modifiziert werden. Die bislang notwendigen aufwendigen und meist nur unter Hinzuziehung von Softwarefachleuten zu bewältigenden Einlernprozesse können entfallen. Erforderlich ist lediglich, die Objekte 36, die sich in der Nähe der möglichen Fahrwege des Transportfahrzeugs befinden, mit geeigneten Verkleidungen 38 zu versehen.

Vorzugsweise sind die seitlichen vertikalen Ränder des Trägers 40 abgerundet, damit Störeffekte an den Kanten nicht zu einer Detektion des Trägers 40 führen.

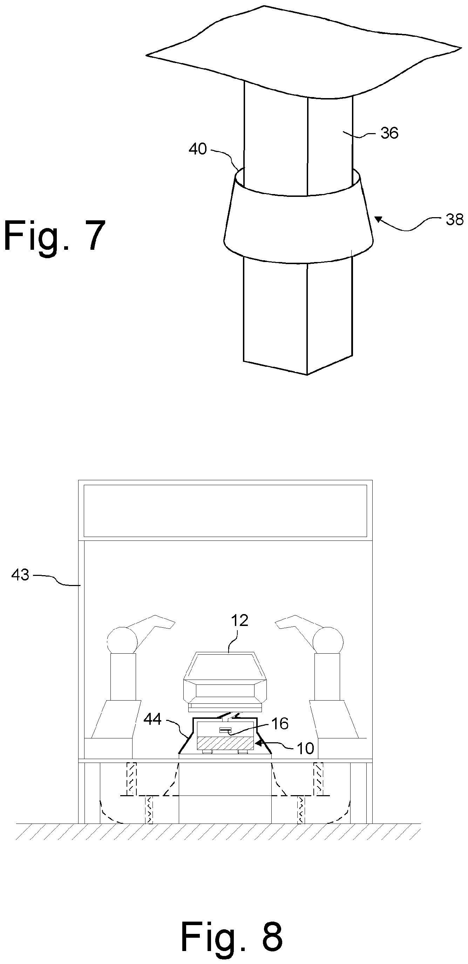

In vielen Fällen handelt es sich bei den Objekten 36 um sich vertikal erstreckende Füße, Pfeiler oder Säulen. Die Figur 7 zeigt ein solches Objekt 36 mit einer davon getragenen Verkleidung 38 in einer schematischen perspektivischen Darstellung. Die Verkleidung 38 besteht hier aus einem mit einer Aluminiumfolie beschichteten Träger 40 aus Pappe, der die Form eines Kegelmantelabschnittes hat. Die Verkleidung 38 wird als gekrümmtes Band zur Verfügung gestellt und einfach um das Objekt 36 herumgeschlungen, an den Enden zusammengefügt und auf der gewünschten Höhe befestigt. Auf diese Weise ist das gesamte Objekt 36 mit einfachen mechanischen Mitteln für die Personenschutzscanner unsichtbar geworden.

Die Figuren 8 bis 11 zeigen mögliche Anwendungsbeispiele für das erfindungsgemäße Transportsystem.

In der Figur 8 ist im Querschnitt eine Lackierkabine 43 gezeigt. Das Transportfahrzeug 10 mit einem frontseitig angeordneten Personenschutzsensor 16 befindet sich bei dieser Anwendung in einem Tunnel 44, der das Transportfahrzeug 10 vor Overspray schützt. Als Overspray bezeichnet man Lackpartikel, die durch Zerstäuben entstehen und sich nicht auf der zu beschichtenden Oberfläche abgesetzt haben. Im dargestellten Ausführungsbeispiel werden zum Zerstäuben Rotationszerstäuber eingesetzt, die von Lackierrobotern 46 über die von dem Transportfahrzeug 10 geförderten Fahrzeugkarosserien 12 geführt werden.

Die Innenflächen des Tunnels 44 sind reflektierend beschichtet oder tragen reflektierende Verkleidungen, um sie für den Personenschutzsensor 16 unsichtbar zu machen.

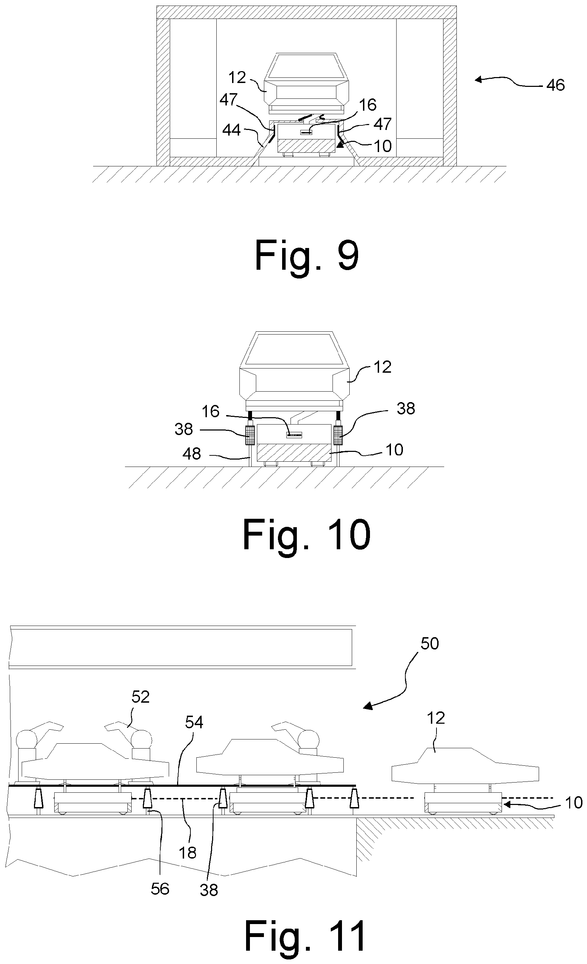

Die Figur 9 zeigt in einem schematischen Querschnitt ein Transportfahrzeug 10, das ebenfalls in einem Tunnel 44 geführt wird. Der Tunnel 44 befindet sich hier jedoch nicht in einer Lackierkabine 43, sondern in einem Trockner 46. Der Tunnel 44 schützt das Transportfahrzeug 10 vor der im Trockner 46 herrschenden Hitze. Bei diesem Ausführungsbeispiel sendet der Personenschutzsensor 16 Mikrowellen aus. Die Innenwand des Tunnels 44 ist mit einem Dallenbach-Absorber 47 beschichtet, der die auftreffenden Mikrowellen phasenversetzt reflektiert, wodurch es infolge destruktiver Interferenz zu einer Unterdrückung der Reflexion kommt.

Die Figur 10 zeigt ein Transportfahrzeug 10 bei der Übergabe einer Fahrzeugkarosserie 12 auf eine Stützstruktur 48, auf der die Fahrzeugkarosserie 12 abgesetzt wird. Die Beine der Stützstruktur 48, zwischen denen das Transportfahrzeug 10 hindurchfahren muss, stellen ebenfalls Objekte dar, die in der erfindungsgemäßen Weise für den Personenschutzsensor 16 unsichtbar gemacht werden können.

Bei diesem Ausführungsbeispiel sendet der Personenschutzsensor 16 des Transportfahrzeugs 16 Radarstrahlung aus. Die Beine der Stützstruktur 48 tragen zylindrische, als Schaumabsorber ausgeführte Verkleidungen 38, welche die auftreffende Radarstrahlung absorbieren, wodurch die Beine für den Personenschutzsensor 16 unsichtbar werden.

Die Figur 11 zeigt mehrere Transportfahrzeuge 10 bei der Fahrt durch einen Montageabschnitt 50 einer Fertigungslinie. Die für die Montage eingesetzten Roboter 52 befinden sich auf einer erhöhten Montageplattform 54, die mit Hilfe von Stützen 56 gegenüber einem Fahrboden für die Fahrzeuge 10 aufgeständert ist. Die Stützen 56 stellen Objekte dar, die in der erfindungsgemäßen Weise für die Personenschutzsensoren 16 unsichtbar gemacht werden müssen, da sie in dem durch eine gestrichelte Linie angedeuteten Überwachungsbereich 18 der Personenschutzsensoren 16 liegen. Die Stützen tragen zu diesem Zwecke gerichtet reflektierende Verkleidungen 38, wie sie in der Figur 7 dargestellt sind.

## Patentansprüche

1. Transportsystem zum Transportieren von Werkstücken (12), mit
einem Fahrweg,
mehreren entlang des Fahrwegs angeordneten Objekten (36),
einem fahrerlosen Transportfahrzeug (10), das eine Werkstückaufnahme (14) und einen Personenschutzsensor (16) hat, der
einen Sender (30) zur Erzeugung von Detektionsstrahlung (34) und
einen Empfänger (32) aufweist, der dazu eingerichtet ist, Detektionsstrahlung zu empfangen, die von dem Sender (30) erzeugt und von Personen oder Objekten (36) reflektiert wurden, die sich in einem Überwachungsbereich (18) befinden, der von der Detektionsstrahlung (34) erfasst wird,
einer Steuereinrichtung (20), die dazu eingerichtet ist,
das Transportfahrzeug (10) entlang des Fahrwegs so zu steuern, dass es nicht mit den Objekten (36) kollidiert,
und eine Sicherheitsmaßnahme auslösen, wenn der Personenschutzsensor (16) eine Person in dem Überwachungsbereich (18) erfasst hat,
**dadurch gekennzeichnet, dass**
die Objekte (36) eine Beschichtung (47) oder eine Verkleidung (38) tragen, die darauf auftreffende Detektionsstrahlung absorbiert oder so gerichtet reflektiert, dass sie nicht auf den Empfänger (32) gelangen kann.

2. Transportsystem nach Anspruch 1, **dadurch gekennzeichnet, dass** der Personenschutzsensor (16) ein Laserscanner ist.

3. Transportsystem nach Anspruch 1 oder 2, **dadurch gekennzeichnet, dass** die von dem Personenschutzsensor (16) erzeugte Detektionsstrahlung sich in einer Ebene ausbreitet, die zumindest annähernd parallel zu einer Bodenfläche angeordnet ist, auf der sich das Transportfahrzeug (10) bewegt, und dass die Objekte (36) nur in einem Höhenabschnitt die Beschichtung (47) oder die Verkleidung (38) tragen, der von der Ebene durchsetzt wird.

4. Transportsystem nach einem der vorhergehenden Ansprüche, **dadurch gekennzeichnet, dass** die Verkleidung (38) einen spiegelnd beschichteten Träger (40) aufweist.

5. Transportsystem nach Anspruch 4, **dadurch gekennzeichnet, dass** der Träger ausgewählt ist aus der Gruppe bestehend aus einer Kunststofffolie, einer Pappe, einer Metallplatte und einer Glasplatte.

6. Transportsystem nach Anspruch 5, **dadurch gekennzeichnet, dass** der Träger (40) so ausgerichtet ist, dass die Einfallsebene der Detektionsstrahlung vertikal ausgerichtet ist.

7. Transportsystem nach Anspruch 6, **dadurch gekennzeichnet, dass** der Träger (40) zumindest abschnittsweise eine konische Form hat.

8. Verfahren zum Betreiben eines Transportsystems für den Transport von Werkstücken (12), mit folgenden Schritten:
a) Bereitstellen eines Transportsystems mit einem fahrerlosen Transportfahrzeug (10), das eine Werkstückaufnahme (14) und einen Personenschutzsensor (16) hat, der einen Sender (30) zur Erzeugung von Detektionsstrahlung (34) und einen Empfänger (32) aufweist, wobei der Empfänger (32) dazu eingerichtet ist, Detektionsstrahlung zu empfangen, die von dem Sender (30) erzeugt und von Personen oder Objekten (36) reflektiert wurden, die sich in einem Überwachungsbereich (18) befinden, der von der Detektionsstrahlung (34) erfasst wird,
b) Anbringen einer Beschichtung (47) oder einer Verkleidung (38) auf Objekten (36), die entlang eines Fahrweges für das Transportfahrzeug (10) angeordnet sind, wobei die Beschichtung (47) bzw. die Verkleidung (38) die darauf auftreffende Detektionsstrahlung (34) absorbiert oder so gerichtet reflektiert, dass sie nicht auf den Empfänger gelangen kann;
c) Steuern des Transportfahrzeugs (10) entlang des Fahrwegs so, dass es nicht mit den Objekten (36) kollidiert.
d) Auslösen einer Sicherheitsmaßnahme, wenn der Personenschutzsensor (16) eine Person in dem Überwachungsbereich (18) erfasst hat.

9. Verfahren nach Anspruch 8,**dadurch gekennzeichnet, dass** der Personenschutzsensor (16) ein Laserscanner ist.

10. Verfahren nach Anspruch 8 oder 9, **dadurch gekennzeichnet, dass** die von dem Personenschutzsensor (16) erzeugte Detektionsstrahlung sich in einer Ebene ausbreitet, die zumindest annähernd parallel zu einer Bodenfläche angeordnet ist, auf der sich das Transportfahrzeug (10) bewegt, und dass die Objekte (36) nur in einem Höhenabschnitt die Beschichtung (47) oder die Verkleidung (38) tragen, der von der Ebene durchsetzt wird.

11. Verfahren nach einem der Ansprüche 8 bis 10, **dadurch gekennzeichnet, dass** die Verkleidung (38) einen spiegelnd beschichteten Träger (40) aufweist.

12. Verfahren nach Anspruch 11, **dadurch gekennzeichnet, dass** der Träger ausgewählt ist aus der Gruppe bestehend aus einer Kunststofffolie, einer Pappe, einer Metallplatte und einer Glasplatte.

13. Verfahren nach Anspruch 12, **dadurch gekennzeichnet, dass** der Träger (40) so ausgerichtet wird, dass die Einfallsebene der Detektionsstrahlung vertikal ausgerichtet ist.

14. Verfahren nach Anspruch 13, **dadurch gekennzeichnet, dass** der Träger (40) zumindest abschnittsweise eine konische Form hat.

## Claims

1. Transport system for transporting workpieces (12), comprising
a travel path,
several objects (36) arranged along the travel path,
a driverless transport vehicle (10) having a workpiece holder (14) and a personal protection sensor (16), which comprises
a transmitter (30) for generating detection radiation (34) and
a receiver (32) adapted to receive detection radiation generated by the transmitter (30) and reflected from persons or objects (36) located in a monitoring area (18) monitored by the detection radiation (34),
a control device (20) configured
to steer the transport vehicle (10) along the travel path in such a way that it does not collide with the objects (36),
and to trigger a safety measure if the personal protection sensor (16) has detected a person in the monitoring area (18),
**characterized in that**
the objects (36) carry a coating (47) or cladding (38) that absorbs detection radiation incident thereon or reflects it in such a direction that it cannot reach the receiver (32).

2. Transport system according to claim 1, **characterized in that** the personal protection sensor (16) is a laser scanner.

3. Transport system according to claim 1 or 2, **characterized in that** the detection radiation generated by the personal protection sensor (16) propagates in a plane arranged at least approximately parallel to a ground surface on which the transport vehicle (10) moves, and that the objects (36) support the coating (47) or the cladding (38) only in a height portion which is traversed by said plane.

4. Transport system according to any one of the preceding claims, **characterized in that** the cladding (38) comprises a mirror-coated support (40).

5. Transport system according to claim 4, **characterized in that** the support is selected from the group consisting of a plastic film, a cardboard, a metal plate and a glass plate.

6. Transport system according to claim 5, **characterized in that** the support (40) is oriented such that the plane of incidence of the detection radiation is oriented vertically.

7. Transport system according to claim 6, **characterized in that** the support (40) has a conical shape at least in sections.

8. Method for operating a transport system for transporting workpieces (12), comprising the following steps:
a) Providing a transport system comprising a driverless transport vehicle (10) having a workpiece holder (14) and a personal protection sensor (16) comprising a transmitter (30) for generating detection radiation (34) and a receiver (32), wherein the receiver (32) is adapted to receive detection radiation generated by the transmitter (30) and reflected from persons or objects (36) located in a monitoring area (18) monitored by the detection radiation (34),
b) Applying a coating (47) or cladding (38) to objects (36) disposed along a path of travel for the transport vehicle (10), the coating (47) or cladding (38), respectively, absorbing detection radiation (34) incident thereon or reflecting it in such a direction that it cannot reach the receiver;
c) Steering the transport vehicle (10) along the travel path so that it does not collide with the objects (36).

9. Method according to claim 8, **characterized in that** the personal protection sensor (16) is a laser scanner.

10. Method according to claim 8 or 9, **characterized in that** the detection radiation generated by the personal protection sensor (16) propagates in a plane arranged at least approximately parallel to a ground surface on which the transport vehicle (10) moves, and that the objects (36) support the coating (47) or the cladding (38) only in a height portion which is traversed by said plane.

11. Method according to any one of claims 8 to 10, **characterized in that** the cladding (38) comprises a mirror-coated support (40).

12. Method according to claim 11, **characterized in that** the support is selected from the group consisting of a plastic film, a cardboard, a metal plate and a glass plate.

13. Method according to claim 12, **characterized in that** the support (40) is oriented such that the plane of incidence of the detection radiation is oriented vertically.

14. Method according to claim 13, **characterized in that** the support (40) has a conical shape at least in sections.

## Revendications

1. Système de transport pour le transport de pièces à usiner (12), avec
une voie,
plusieurs objets (36) disposés le long de la voie,
un véhicule de transport sans conducteur (10) qui a un logement de pièce à usiner (14) et un capteur de protection des personnes (16) qui présente un émetteur (30) pour la génération de rayonnement de détection (34) et
un récepteur (32) qui est configuré pour recevoir du rayonnement de détection qui a été généré par l'émetteur (30) et réfléchi par des personnes ou objets (36) qui se trouvent dans une région de surveillance (18) qui est détectée par le rayonnement de détection (34),
un dispositif de commande (20) qui est configuré pour
commander le véhicule de transport (10) le long de la voie de sorte qu'il n'entre pas en collision avec les objets (36),
et déclencher une mesure de sécurité lorsque le capteur de protection des personnes (16) a détecté une personne dans la région de surveillance (18),
**caractérisé en ce que**
les objets (36) portent un enrobage (47) ou un revêtement (38) qui absorbe ou réfléchit du rayonnement de détection incident sur lui de manière dirigée de sorte qu'il ne peut parvenir sur le récepteur (32).

2. Système de transport selon la revendication 1, **caractérisé en ce que** le capteur de protection des personnes (16) est un scanner laser.

3. Système de transport selon la revendication 1 ou 2, **caractérisé en ce que** le rayonnement de détection généré par le capteur de protection des personnes (16) se propage dans un plan qui est disposé au moins approximativement parallèlement à une surface de sol sur laquelle le véhicule de transport (10) se déplace, et que les objets (36) ne portent l'enrobage (47) ou le revêtement (38) que dans une section de hauteur qui est pénétrée par le plan.

4. Système de transport selon une des revendications précédentes, **caractérisé en ce que** le revêtement (38) présente un support à enrobage réfléchissant (40).

5. Système de transport selon la revendication 4, **caractérisé en ce que** le support est sélectionné parmi le groupe constitué d'une feuille en plastique, d'un carton, d'une plaque métallique et d'une plaque de verre.

6. Système de transport selon la revendication 5, **caractérisé en ce que** le support (40) est orienté de sorte que le plan d'incidence du rayonnement de détection est orienté verticalement.

7. Système de transport selon la revendication 6, **caractérisé en ce que** le support (40) a une forme conique au moins par sections.

8. Procédé d'exploitation d'un système de transport pour le transport de pièces à usiner (12), avec les étapes suivantes :
a) mise à disposition d'un système de transport avec un véhicule de transport sans conducteur (10) qui a un logement de pièce à usiner (14) et un capteur de protection des personnes (16) qui présente un émetteur (30) pour la génération de rayonnement de détection (34) et un récepteur (32), dans lequel le récepteur (32) est configuré pour recevoir du rayonnement de détection qui a été généré par l'émetteur (30) et réfléchi par des personnes ou objets (36) qui se trouvent dans une région de surveillance (18) qui est détectée par le rayonnement de détection (34),
b) application d'un enrobage (47) ou d'un revêtement (38) sur des objets (36) qui sont disposés le long d'une voie pour le véhicule de transport (10), dans lequel l'enrobage (47) ou le revêtement (38) absorbe ou réfléchit le rayonnement de détection (34) incident sur lui de manière dirigée de sorte qu'il ne peut parvenir sur le récepteur ;
c) commande du véhicule de transport (10) le long de la voie de sorte qu'il n'entre pas en collision avec les objets (36) ;
d) déclenchement d'une mesure de sécurité lorsque le capteur de protection des personnes (16) a détecté une personne dans la région de surveillance (18).

9. Procédé selon la revendication 8, **caractérisé en ce que** le capteur de protection des personnes (16) est un scanner laser.

10. Procédé selon la revendication 8 ou 9, **caractérisé en ce que** le rayonnement de détection généré par le capteur de protection des personnes (16) se propage dans un plan qui est disposé au moins approximativement parallèlement à une surface de sol sur laquelle le véhicule de transport (10) se déplace, et que les objets (36) ne portent l'enrobage (47) ou le revêtement (38) que dans une section de hauteur qui est pénétrée par le plan.

11. Procédé selon une des revendications 8 à 10, **caractérisé en ce que** le revêtement (38) présente un support à enrobage réfléchissant (40).

12. Procédé selon la revendication 11, **caractérisé en ce que** le support est sélectionné parmi le groupe constitué d'une feuille en plastique, d'un carton, d'une plaque métallique et d'une plaque de verre.

13. Procédé selon la revendication 12, **caractérisé en ce que** le support (40) est orienté de sorte que le plan d'incidence du rayonnement de détection est orienté verticalement.

14. Procédé selon la revendication 13, **caractérisé en ce que** le support (40) a une forme conique au moins par sections.
